# EUROPÄISCHE PATENTSCHRIFT

(11) **EP 2 015 862 B1**
(45) Veröffentlichungstag und Bekanntmachung des Hinweises auf die Patenterteilung: **26.12.2012**
(21) Anmeldenummer: 07724974.6
(22) Anmeldetag: 08.05.2007
(51) Int. Cl.: B01D 61/18, B01D 63/08, B01D 65/00, B01D 71/02, C02F 1/44, C02F 3/12

(54) **TAUCHFILTERSYSTEM FÜR DIE ABWASSERAUFBEREITUNG UND DIE TRINKWASSERGEWINNUNG**
FILTER SYSTEM FOR SEWAGE TREATMENT AND DRINKING WATER PROVISION
SYSTEME DE FILTRAGE POUR LE TRAITEMENT D'EAUX USÉES ET L'OBTENTION D'EAU POTABLE

(30) Priorität: 08.05.2006 DE 102006022502
(43) Veröffentlichungstag der Anmeldung: 21.01.2009
(73) Patentinhaber: ITN Nanovation AG, 66117 Saarbrücken (DE)
(72) Erfinder: BRAUN, Gerhard, 66117 Saarbrücken (DE); BÉLIÈRES, Eric, 66123 Saarbrücken (DE); GABRIEL, Kay Gunther, 66121 Saarbrücken (DE); VOLZ, Manfred, 66352 Grossrosseln (DE)
(74) Vertreter: Patentanwälte Ruff, Wilhelm, Beier, Dauster & Partner
(86) Internationale Anmeldenummer: PCT/EP2007/004050
(87) Internationale Veröffentlichungsnummer: WO 2007/128565

(56) Entgegenhaltungen:
- EP-A- 1 055 448
- EP-A1- 0 602 560
- WO-A-01/36074
- WO-A-2004/071620
- DE-A1- 19 807 769
- JP-A- 2003 117 356
- US-A- 5 910 250
- US-B1- 6 716 275

## Beschreibung

Die Erfindung betrifft ein Filtersystem für die Abwasseraufbereitung und die Trinkwassergewinnung.

Konventionelle Kläranlagen enthalten in der Regel ein Absetzbecken, in dem in einem ersten Schritt Grobbestandteile aus dem Abwasser entfernt werden, ein Belebungsbecken und ein Nachklärbecken. Im Belebungsbecken werden Mikroorganismen eingesetzt, um die im Abwasser enthaltenen Fäkalien oder andere organische Stoffe zu zersetzen. Im Nachklärbecken werden diese Mikroorganismen im Anschluß an das Belebungsbecken üblicherweise durch Sedimentation wieder vom Abwasser getrennt und gegebenenfalls, zumindest teilweise, in das Belebungsbecken zurückgeführt. Allerdings ist dabei eine vollständige Abtrennung der Mikroorganismen, insbesondere durch einen Sedimentationsprozeß in der Regel nicht möglich, so daß die Gefahr besteht, daß die zum Teil gesundheitsschädlichen Mikroorganismen mit dem Abwasser in die Umwelt gelangen können. Dies ist in der Regel nicht akzeptabel. So existieren beispielsweise Richtlinien der Europäischen Union zur Gewässerreinhaltung, die europaweit vorsehen, daß ausschließlich geklärte Abwässer, die im wesentlichen frei von Mikroorganismen sind, in die Umwelt abgelassen werden dürfen.

Aus den genannten Gründen wird deshalb das aus dem Belebungsbecken stammende, aufgereinigte Abwasser durch Filtration mit sogenannten Feinfiltern weiterbehandelt, wobei die vorhandenen Mikroorganismen zuverlässig abgetrennt werden können. Unter Feinfilter sollen hierbei diejenigen Filter verstanden werden, die eine ausreichend geringe Porengröße besitzen, um die Mikroorganismen beim Filtrationsprozeß zurückzuhalten. Solche Filter werden häufig in Abhängigkeit von der Porengröße auch als Mikrofilter, Ultrafilter, Nanofilter oder dergleichen bezeichnet.

Die Problematik, daß nur biologisch geklärtes Abwasser, das im wesentlichen frei von Mikroorganismen ist, in die Umwelt abgelassen werden darf, stellt sich insbesondere bei Verursachern von Abwässern, die nicht an ein öffentliches Abwassernetz angeschlossen sind oder angeschlossen werden können. Dies betrifft in Europa, insbesondere in Deutschland, vor allem ländliche Gebiete. So sind in Deutschland, insbesondere in Ostdeutschland, schätzungsweise immer noch mehrere Millionen Menschen nicht an ein öffentliches Abwassernetz angeschlossen. Die entsprechenden Haushalte müssen jedoch nach den jetzt geltenden gesetzlichen Regelungen entweder mit einem solchen Anschluß ans Abwassernetz oder durch den Betrieb einer Kleinkläranlage versorgt werden.

Jedoch stellen sich auch gerade bei Kleinkläranlagen die oben genannten Probleme, so daß auch hier, in der Regel in einem Nachklärbecken oder in einer Nachklärkammer Mikroorganismen, die aus einem Belebungsbecken oder aus einer Belebungskammer eingetragen wurden, abgetrennt werden müssen. Dementsprechend müssen insbesondere auch für solche Fälle entsprechende Filtersysteme zur Verfügung gestellt werden. Diese dürfen gerade im Falle von Kleinkläranlagen bestimmte Abmessungen nicht überschreiten und sollen sich durch eine möglichst einfache Bauweise auszeichnen. Darüber hinaus stellt sich gerade hier die Problematik, daß bestehende Anlagen, die beispielsweise noch mit einer Sedimentation der Mikroorganismen bei der Nachklärung arbeiten, mit Filtersystemen nachgerüstet werden sollen oder müssen.

Bei den Anlagen zur Abwasseraufbereitung, aber auch zur Trinkwassergewinnung, die überhaupt Filter verwenden, ist es in der Regel Stand der Technik, organische Filter bzw. Filtermembranen einzusetzen. Diese sind häufig in einer sogenannten Modulform angeordnet, d. h. es sind mindestens zwei, in der Regel aber eine Vielzahl von Membranen in einer Haltevorrichtung befestigt, die dann von der zu filtrierenden Flüssigkeit durchströmt wird. In diesem Zusammenhang kann beispielsweise auf die EP-A1-602 560, die WO-A-03/037 489 und die WO-A-2004/091 755 verwiesen werden.

Darüber hinaus sind auch Filter aus Keramikmaterial bekannt, die zur Abtrennung fester Bestandteile aus Flüssigkeiten eingesetzt werden können.

So beschreibt die DE-A-26 03 505 ein Flachmembranmodul für Trennvorgänge in der Flüssigphase. Die dort beschriebenen Filter sind jedoch für einen praktischen Einsatz bei den oben genannten Anwendungen nur bedingt geeignet. So haben diese Filter keine im Inneren des Filters angeordneten Kanäle, durch die das Filtrat abgezogen werden könnte. Dies hat zur Folge, daß immer nur eine Seite des Filters mit der zu filtrierenden Flüssigkeit beaufschlagt werden kann und das Filtrat immer über die jeweils gegenüberliegende Seite des Filters abgezogen werden muß. Im übrigen müssen die Filter der DE-A-26 03 505 für den Einbau in das Modul durchbohrt werden, was gerade bei keramischen Materialien problematisch sein kann.

Die WO-A-2004/071620 betrifft Filtersysteme, bei denen mehrere keramische Membranen unmittelbar mit einem Sammelrohr verbunden sind. In dieses können sie eingeklebt sein. Alternativ wird auch eine lösbare Befestigung vorgeschlagen. Diese erlaubt grundsätzlich den Austausch einzelener keramischer Membranen, beispielsweise bei einem Defekt. Allerdings ist diese Anordnung nachteilhaft hinsichtlich der Fluiddichtigkeit im Kontaktbereich zwischen den keramischen Membranen und dem Sammelrohr.

Die DE-C-43 29 473 zeigt ebenfalls druckstabile anorganische Filtermembranen, die in ihrer Herstellung allerdings sehr aufwendig sind. So müssen zwei plattenförmige Hälften mit halbkreisförmigen Ausbuchtungen, die dann später die innen verlaufenden Filtratkanäle bilden, zusammengesintert werden. Darüber hinaus ist in der DE-C-43 29 473 nirgends angesprochen, auf welche Weise die dort beschriebenen Membranen in ein Filtersystem integriert werden können.

Demgegenüber zeigt die DE-A-198 07 769 eine Halterung für keramische Mikrofilter, in die ein keramischer Flachfilter (Membranplatte) eingesetzt werden kann. Zu diesem Zweck ist an der Halterung eine Aussparung vorgesehen, deren Umriß in der Draufsicht in etwa dem Querschnitt des darin einzusetzenden Mikrofilters entspricht. Die notwendige Flüssigkeitsdichtigkeit wird mit Hilfe von Gummidichtungen erreicht, die zwischen den Wandungen der Aussparung und dem Mikrofilter eingebracht sind. Auf diese Weise kann die zu filtrierende Flüssigkeit einen Großteil des in die Halterung eingesetzten Filters frei umströmen, und das Filtrat wird mit Hilfe eines leichten Unterdrucks über die im Inneren des Filters vorgesehenen Kanäle durch die Halterung hindurch abgeführt.

Der für die Abführung des Filtrats aus verschiedenen Halterungen notwendige Sammelkanal wird bei der DE-A-198 07 769 durch eine entsprechende Ausgestaltung der Halterung selbst realisiert, in dem dort vorgesehene Ansätze miteinander kommunizieren können. Auf diese Weise lassen sich dann mehrere Halterungen übereinandersetzen und bilden dementsprechend einen in diese Halterungen integrierten Sammelkanal.

Die Ausgestaltung der Halterung und der daraus gebildeten Filtereinheit bei der DE-A-198 07 769 kann zum einen deshalb nachteilig sein, da Gummidichtungen unter Umständen nicht die notwendige Flüssigkeitsdichtigkeit bereitstellen können. Dies ist insbesondere dann der Fall, wenn das Filtrat mit einer vergleichsweise großen Druckdifferenz (Unterdruck) abgesaugt wird. Dann kann nicht filtrierte Flüssigkeit in die Halterung und damit in den Filtratsammelkanal, der eigentlich nur gefilterte, von Mikroorganismen befreite Flüssigkeit enthalten soll, eindringen. Eine mangelnde Flüssigkeitsdichtigkeit kann insbesondere auch beim Rückspülen der Filtereinheit auftreten. Dabei wird der Flüssigkeitsstrom durch den Filter zurückgeleitet, und zwar üblicherweise mit vergleichsweise hohem Flüssigkeitsdruck, um die Filteroberfläche und das Filterinnere von dort vorhandenen Verunreinigungen (Retentat mit Mikroorganismen u. a.) zu befreien.

Zum anderen macht das in der DE-A-198 07 769 offenbarte Filtersystem einen Austausch einzelner Filtereinheiten/Halterungen schwierig. Da der Sammelkanal durch Aufstecken der Halterungen übereinander gebildet ist, kann eine einzelne Filtereinheit/Halterung nur ausgetauscht werden, wenn alle oberhalb oder unterhalb angeordneten Filtereinheiten/ Halterungen abgenommen werden. Eine defekte Filterplatte/-membran kann also nicht auf einfache Weise ausgetauscht werden.

Dementsprechend stellt sich die Erfindung die Aufgabe, die oben genannten Nachteile zu vermeiden. Insbesondere soll ein Filtersystem zur Verfügung gestellt werden, das einen möglichst einfachen Aufbau besitzt. Dementsprechend sollen sowohl die einzelnen Bauteile möglichst einfach aufgebaut sein als auch deren Zusammenbau möglichst einfach realisiert werden können. Im Einsatz soll dabei auch ein möglichst einfacher Austausch einzelner Filter bzw. einzelner Filtereinheiten ermöglicht werden.

Diese Aufgabe wird gelöst durch das Filtersystem mit den Merkmalen des Anspruchs 1.

Das Filtersystem umfasst mindestens zwei Filtereinheiten mit mindestens einem keramischen Flachfilter und Halterungen zur flüssigkeitsdichten Festlegung des Filters. Dabei ist ein Abfluß des Filtrats, d. h. der gereinigten (filtrierten), flüssigen Phase über das Innere des Filters durch die Halterung hindurch vorgesehen. Der Filter ist dabei in der Halterung mit Hilfe eines Klebstoffs durch Verklebung (flüssigkeitsdicht) festgelegt.

Die mit der Erfindung erreichbaren Vorteile werden später noch erläutert. An dieser Stelle soll lediglich hervorgehoben werden, daß durch die Verklebung eine einfache und zuverlässige Abdichtung gegen Flüssigkeit zwischen dem Filter und der Halterung bereitgestellt werden kann. So müssen zum einen keine zusätzlichen Bauteile, wie Dichtungsringe und dergleichen, vorgesehen werden, die gegebenenfalls noch eine aufwendige Konstruktion der Halterung, beispielsweise durch das Vorsehen von umlaufenden Nuten, in die der Dichtring eingesetzt werden muß, erforderlich machen. Zum anderen kann der für die Verklebung vorgesehene Klebstoff, je nach verwendeter Halterung oder Filter, gezielt auf diejenigen Bereiche der Halterung oder des Filters aufgebracht werden, die für die flüssigkeitsdichte Verbindung besonders geeignet sind.

Wie soeben erwähnt, läßt sich die Verklebung, je nach Art und Form des Filters oder nach Form der Halterung, auf ganz unterschiedliche Bereiche des Filters oder der Halterung aufbringen. So können beispielsweise auch nicht-eckige Filter, z. B. runde Filter, in entsprechende Halterungen eingeklebt werden. In allen Fällen ist es jedoch erfindungsgemäß bevorzugt, wenn die Verklebung in mindestens einem Randbereich des Filters, insbesondere nur in diesem Randbereich des Filters, vorgesehen ist. Dies wird im folgenden noch näher erläutert. Eine Verklebung im Randbereich hat den Vorteil, daß die übrigen Bereiche des Filters für die Filtrierung selbst zur Verfügung stehen. Dieser zur Filtrierung genutzte Bereich soll selbstverständlich möglichst groß sein, um eine hohe Filterwirkung und einen hohen Flüssigkeitsdurchsatz zu erreichen.

Bei bevorzugten Ausführungsformen der erfindungsgemäßen Filtereinheit handelt es sich bei dem Filter um ein im wesentlichen rechteckförmiges Flachfilter. Dies soll bedeuten, daß die Oberseite und die ihr gegenüberliegende Unterseite des Filters im wesentlichen rechteckförmig sind. Dies ist die bevorzugte Form der erfindungsgemäß einsetzbaren keramischen Flachfilter bzw. keramischen Flachmembranen.

Zur Festlegung dieser zuletzt beschriebenen Flachfilter ist in der Halterung vorzugsweise eine Aufnahme vorgesehen, deren Form dem entsprechenden Querschnitt des darin festgelegten Filters entspricht. Dies ist so zu verstehen, daß derartige Flachfilter mit einer ihrer Stirnflächen in die Aufnahme des Filters eingebracht sind und an dem sich dadurch innerhalb der Aufnahme befindenden Randbereich durch Verklebung in der Aufnahme festgelegt sind. Dementsprechend ist die Verklebung hier zwischen diesem Randbereich des Filters und der ihr zugewandten Innenseite der Aufnahme in der Halterung vorgesehen.

In Weiterbildung können die zuletzt beschriebenen Ausführungen mit Vorteil so realisiert sein, daß ein, vorzugsweise im wesentlichen rechteckförmiges Flachfilter an mindestens einer Seite, vorzugsweise an zwei seiner gegenüberliegenden Seiten, vorzugsweise an den beiden gegenüberliegenden Stirnseiten, in zwei Halterungen durch Verklebung festgelegt ist. Dementsprechend wird ein solches Flachfilter durch Verklebung jeweils im Randbereich innerhalb einer Aufnahme jeweils einer Halterung durch Verklebung festgelegt. So kann das über die übrigen freiliegenden Außenflächen des Filters in den Filter eintretende Filtrat durch beide, einander gegenüberliegende Halterungen hindurch abfließen.

Bei der Erfindung sind grundsätzlich die unterschiedlichsten Klebstoffe zur Bereitstellung der notwendigen Verklebung geeignet. Solche Klebstoffe können vom Fachmann in entsprechender Weise ausgewählt werden. Die notwendigen Anforderungen an den Klebstoff sind zum einen, daß er in der Lage ist, die notwendige Flüssigkeitsdichtigkeit bereitzustellen. In diesem Zusammenhang muß er auch die notwendige Langzeitstabilität besitzen und darf seine vorteilhaften Eigenschaften frühestens dann verlieren, wenn der Filter selbst zu einem Austausch ansteht. Zum anderen sollte der Klebstoff nach dem Abbinden noch eine gewisse Flexibilität und Elastizität besitzen und nicht zu spröde werden. Dies insbesondere deshalb, damit die auf den Filter im Filtrationsbetrieb wirkenden Kräfte in gewissem Maß abgefangen werden, um ein Aufbrechen der Verklebung oder im Filter Rißbildung im Keramikmaterial zu vermeiden.

Schließlich ist es einsichtig, daß der Klebstoff für eine Haftvermittlung zwischen dem Material des Filters und der Halterung geeignet sein muß. So ist der Filter aus Keramikmaterial gefertigt und die Halterung in der Regel aus Kunststoff. Dies bedingt eine notwendige Haftvermittlung zwischen einem anorganischen Material (Keramik) und einem organischen Material (Kunststoff).

In Übereinstimmung mit den zuletzt gemachten Ausführungen ist es dementsprechend bevorzugt, wenn es sich bei dem Klebstoff um einen sogenannten chemisch härtenden Klebstoff handelt. Bei diesen auch als Reaktionsklebstoffe bezeichneten Klebstoffen erfolgt die Verfestigung und damit der Eintritt der Klebewirkung durch chemische Reaktion entsprechender Bestandteile dieser Klebstoffe. Solche chemisch härtenden Klebstoffe sind dem Fachmann bekannt. Sie können als 1-Komponenten-Klebstoffe (1K-Klebstoffe), bei denen schon gebrauchsfertige Klebemasse verwendet wird, und als 2-Komponenten-Klebstoffe (2K-Klebstoffe), bei denen der Klebstoff vor der Applikation aus zwei getrennten Bestandteilen zusammengemischt wird, eingesetzt werden. Bei der vorliegenden Erfindung ist es bevorzugt, wenn es sich bei dem Klebstoff um einen 2-Komponenten-Klebstoff handelt.

Besonders hervorzuheben als erfindungsgemäß verwendbare Klebstoffe sind die Epoxidharz-Klebstoffe und die Polyurethan-Klebstoffe. Beide Klebstofftypen sind dem Fachmann hinreichend bekannt. Epoxidharz-Klebstoffe sind in der Regel 2-komponentig aufgebaut. Es werden Polymerbausteine verwendet, die am Ende sogenannte Epoxidgruppen tragen und mit einer zweiten Komponente, dem Härter, der Amino- oder Mercaptogruppen enthält, vermischt werden.

Polyurethan-Klebstoffe (PUR) sind 1-komponentig oder 2-komponentig erhältlich. Sie können durch Polykondensation oder Polyaddition aushärten. Die zugrundeliegende Chemie ist dem Fachmann bekannt.

Der bei der Erfindung verwendete Klebstoff wird vorzugsweise so eingesetzt, daß eine geschlossene, streifen- oder bandförmige Verklebung entsteht. Bei der bereits beschriebenen Ausführung mit einem Flachfilter und einer entsprechenden Aufnahme in der Halterung läuft eine solche Verklebung dementsprechend im Randbereich des Filters vollständig um diesen herum und führt so zu der notwendigen Flüssigkeitsdichtigkeit zwischen dem in die Aufnahme eingebrachten Filter und den inneren Wandungen dieser Aufnahme.

Der geschlossene Streifen/Band besitzt vorzugsweise eine Breite zwischen ca. 5 mm und ca. 25 mm, vorzugsweise von ca. 10 mm, und eine Dicke zwischen ca. 1 mm und ca. 5 mm, vorzugsweise ca. 2 mm. Mit derartigen Abmessungen können zum einen die notwendigen Dichtigkeiten erreicht werden, und zum anderen muß nicht zuviel Klebstoff eingesetzt werden.

Der Klebstoff kann sowohl manuell appliziert werden als auch automatisiert. Besonders bevorzugt wird der Klebstoff mittels eines Kleberoboters appliziert.

Die Halterungen der Filtereinheiten weisen mindestens einen Filtrataustritt auf. Dieser Filtrataustritt ist zur Verbindung der Halterungen mit mindestens einem Filtratsammelkanal vorgesehen. Dies hat zur Folge, daß ein von der Filtereinheit getrennter Filtratsammelkanal vorgesehen sein kann, was die Austauschbarkeit von Filtereinheiten in einem Filtersystem erleichtert. Dieser Gesichtspunkt wird später noch näher erläutert. Wie eingangs erwähnt, ist bei der erfindungsgemäßen Filtereinheit ein Abfluß des Filtrats über das Innere des Filters durch die Halterung hindurch vorgesehen. Dementsprechend ist es von Vorteil, wenn der Filter in seinem Inneren mindestens einen Filtratkanal aufweist, der an mindestens einer der Stirnflächen des Filters mündet. Auf diese Weise kann das sich im Inneren des Filters in dessen Poren sammelnde Filtrat in diesen Kanal abgeleitet und über die Stirnflächen des Filters aus dem Filter herausgeleitet werden.

In Weiterbildung ist bei solchen Ausführungen insbesondere vorgesehen, daß es mehrere Filtratkanäle gibt, wobei vorzugsweise diese Filtratkanäle im Inneren des Filters im wesentlichen parallel verlaufen und dementsprechend in zueinander beabstandeten Öffnungen an der Stirnfläche des Filters münden.

Wie bereits ausgeführt, handelt es sich bei den Filtern der erfindungsgemäßen Filtereinheit um keramische Filter, d. h. Filter, die aus einem porösen Keramikmaterial gefertigt sind. Solche Filter lassen sich in den gewünschten Abmessungen, insbesondere als sogenannte Flachfilter, durch Extrusion durch ein Mundstück in monolithischer Form, d. h. in einem Stück, herstellen. Dabei werden auch die erwähnten Filtratkanäle im Inneren des Filters gleich mit ausgebildet.

In Weiterbildung ist es erfindungsgemäß bevorzugt, wenn der Filter mindestens teilweise aus nanoskaligen Partikeln gefertigt ist oder zumindest eine Beschichtung aufweist, die aus nanoskaligen Partikeln besteht. Üblicherweise wird es nicht nötig und aus Kostengründen auch nicht zweckmäßig sein, den gesamten Filter, insbesondere den Flachfilter oder die Membranplatte/Filterplatte, aus nanoskaligem Material zu fertigen. Für eine gute Filtrierwirkung ist es ausreichend, wenn mindestens eine Trennschicht, vorzugsweise eine außenliegende Trennschicht, aus den nanoskaligen Partikeln gefertigt ist.

Unter nanoskaligen Partikeln sollen dabei Partikel mit einer mittleren Korngröße von unter 1 µm, vorzugsweise unter 500 nm, insbesondere unter 100 nm, verstanden werden.

Eine solche, auf dem Flachfilter vorgesehene Beschichtung weist vorzugsweise eine Dicke zwischen 100 nm und 150 µm, vorzugsweise zwischen 500 nm und 100 µm auf. Innerhalb des zuletzten genannten Bereichs sind Dicken der Beschichtung von ca. 25 µm weiter bevorzugt.

Die Porengröße einer solchen Beschichtung aus keramischen nanoskaligen Partikeln kann in Abhängigkeit von den abzutrennenden Mikroorganismen ausgewählt werden. Hier können Poren mit einem Durchmesser zwischen 1 nm und 1.500 nm, vorzugsweise zwischen 50 nm und 300 nm, vorgesehen sein. Innerhalb des zuletzt genannten Bereichs sind Durchmesser der Poren zwischen 200 nm und 300 nm hervorzuheben.

Das unterhalb der Beschichtung aus nanoskaligen Partikeln liegende Keramikmaterial, das als Substrat bezeichnet werden kann, wird in der Regel Poren mit einem größeren Durchmesser aufweisen als in der Beschichtung. Dies erleichtert die Abführung des Filtrats im Inneren des Filters. Dementsprechend sind in dem keramischen Material, das das Substrat bildet, vorzugsweise Poren mit einem Durchmesser zwischen 100 nm und 10 µm, vorzugsweise zwischen 500 nm und 3 µm, vorgesehen.

Als Keramikmaterialien für den Filter können sowohl oxidische Keramiken als auch nicht oxidische Keramiken zum Einsatz kommen. Bevorzugt verwendbar sind oxidische Keramiken, insbesondere Aluminiumoxid-Keramiken und Zirkonoxid-Keramiken.

Auch bei den nanoskaligen Partikeln für die Beschichtung handelt es sich vorzugsweise um solche Aluminiumoxid-Partikel. Daneben sind insbesondere auch nanoskalige Partikel aus Zirkoniumdioxid oder Titandioxid oder auch Mischungen aus allen genannten oxidischen Partikeln geeignet. Für besonders geringe Porengrößen sind auch Zeolithe einsetzbar.

Die beschriebenen keramischen Filter zeichnen sich gegenüber Filtermembranen aus organischem Polymermaterial durch eine hohe mechanische und chemische Beständigkeit, eine lange Lebensdauer und eine hohe Druckbeständigkeit aus. Außerdem sind sie leichter zu reinigen.

Darüber hinaus können die keramischen Filter, insbesondere die auf ihren Außenflächen mit einem nanoskaligen keramischen Material beschichteten Filter mit Vorteil im sogenannten Dead-End-Verfahren betrieben werden. Dabei wird die zu reinigende Flüssigkeit wie in einer Sackgasse durch den Filter gedrückt. Dementsprechend wird mit einem konstanten Permeatfluß durch das Filter hindurch gearbeitet, d. h. es tritt eine gleiche Menge an unfiltrierter Flüssigkeit in das Filter ein wie als Filtrat aus dem Filter wieder austritt. Die abfiltrierten Verunreinigungen, z. B. die Mikroorganismen, sammeln sich auf der Oberfläche des Filters oder in den entsprechenden engen Poren des Filters und werden in regelmäßigen Zeitabständen durch Rückspülen unter Anlegen eines entsprechenden Überdrucks wieder aus dem Filter aus- oder abgetragen. Der Vorteil des Dead-End-Verfahrens liegt darin, daß trotz der kurzen Spülunterbrechungen ein geringerer Energieverbrauch zu verzeichnen ist als beim sogenannten Cross-Flow-Verfahren, bei dem ein großes Flüssigkeitsvolumen permanent im Kreis am Filter vorbeigeführt werden muß. Dementsprechend wird beim Cross-Flow-Verfahren immer nur ein Teil der Flüssigkeit durch das Filter gedrückt.

Darüber hinaus läßt sich beim Dead-End-Verfahren eine kompaktere Bauweise des Filtersystems insgesamt realisieren.

Es folgt nun eine Beschreibung der Halterungen der Filtereinheiten. Eine solche Halterung wird auch als "Schuh" bezeichnet, da sie in entsprechender Weise ausgebildet ist, einen Filter aufzunehmen (wie ein Schuh einen Fuß).

Erfindungsgemäß besitzt die Halterung eine Aufnahme, deren Form im wesentlichen dem Querschnitt eines darin festzulegenden Filters entspricht, sowie einen Filtrataustritt, der zur Verbindung mit einem Filtratsammelkanal oder Filtratsammelrohr ausgebildet ist. Dementsprechend bildet die Halterung also keinen Teil eines solchen Filtratsammelkanals, sondern ist zur Verbindung mit einem (separaten) Filtratsammelkanal vorgesehen.

Bei der erfindungsgemäßen Halterung handelt es sich vorzugsweise um einen länglichen, vorzugsweise einstückigen Körper mit einem im wesentlichen reckeckförmigen oder quadratischen Querschnitt. Bei solchen Ausgestaltungen nimmt die Halterung eine vorzugsweise Ausgestaltung der Aufnahme für den Filter auf, welche ja ebenfalls vorzugsweise zur Festlegung von im wesentlichen rechteckförmigen Flachfiltern vorgesehen ist. Besondere Ausgestaltungen der erfindungsgemäßen Halterung werden noch im Zusammenhang mit den Figuren beschrieben.

Der Filtrataustritt an der Halterung ist als Steckverbinder ausgebildet, der mit einer zugehörigen Aufnahme in einem Filtratsammelkanal/Filtratsammelrohr zusammenwirkt. Auf diese Weise läßt sich der Filtrataustritt in einfacher Weise an einem solchen Kanal flüssigkeitsdicht befestigen und auch wieder von diesem Kanal entfernen. Dies erlaubt einen raschen, unkomplizierten Austausch der Halterung bzw. einer Filtereinheit mit einer solchen Halterung am Sammelkanal.

Zu diesem Zweck kann die Steckverbindung als Rast- oder Schnappverbindung ausgestaltet sein, wobei entsprechende Rast- oder Schnappelemente am Filtrataustritt bzw. der zugehörigen Aufnahme ineinander einrasten oder einschnappen.

Gegebenenfalls kann die Dichtigkeit der Steckverbindung durch zusätzliche Dichtelemente verstärkt werden, beispielsweise durch einen Dichtring, der an einem Filtrataustritt mit kreisförmigem Querschnitt vorgesehen ist.

Weiter können an der Halterung vorzugsweise Positioniermittel vorgesehen sein, die zur Fixierung der Halterung in einer Haltevorrichtung für Filtereinheiten vorgesehen sind. Solche Positioniermittel dienen dazu, diese Halterungen oder Filtereinheiten mit diesen Halterungen in einer Haltevorrichtung, insbesondere für eine Vielzahl von Filtereinheiten, in richtiger Lage zu positionieren und gegebenenfalls dort zu fixieren. Dies erleichtert den Einbau solcher Halterungen oder Filtereinheiten in derartige Haltevorrichtungen.

Insbesondere kann es sich bei den Positioniermitteln um Vorsprünge, insbesondere stiftförmige Vorsprünge, handeln, die in entsprechende Öffnungen oder Ausnehmungen in der Haltevorrichtung passen. Dies wird ebenfalls im Zusammenhang mit den Figuren noch näher erläutert. Erfindungsgemäß ist die Halterung vorzugsweise aus einem Kunststoff, insbesondere aus einem durch Spritzguß verarbeitbaren Kunststoff gefertigt. Hierbei handelt es sich insbesondere um die thermoplastischen Kunststoffe, die dem Fachmann bekannt sind. Besonders hervorzuheben ist im Zusammenhang mit der vorliegenden Erfindung Polyethersulfon (PES).

Es folgt nun eine Beschreibung des Filtratsammelkanals des Filtersystems. Dieser erfindungsgemäße Sammelkanal ist einstückig ausgebildet und weist mindestens eine Aufnahme zur Verbindung mit Filtrataustritten einer Halterung für keramische Filter sowie mindestens einen Filtratsammelaustritt zur Ableitung des Filtrats aus dem Sammelkanal auf.

Die erfindungsgemäße Konstruktion des Sammelkanals ist zum einen von Vorteil, da der Sammelkanal als separates Bauteil des Filtersystems aus Filtereinheit und Sammelkanal ausgebildet ist. Dies bedeutet, daß solche Filtereinheiten leicht mit dem Sammelkanal verbunden werden und auch leicht am Sammelkanal ausgetauscht werden können. Am Sammelkanal sind in bevorzugten Ausführungsformen 2 bis 10 Aufnahmen vorhanden, es kann aber auch eine deutlich größere Zahl von Aufnahmen vorhanden sein, die vorzugsweise mit entsprechenden Filtrataustritten entsprechender Halterungen bzw. Filtereinheiten zusammenwirken.

In Weiterbildung weist der erfindungsgemäße Sammelkanal mindestens 10, vorzugsweise mindestens 20, Aufnahmen für Filtrataustritte auf. Auf diese Weise kann eine Vielzahl von Halterungen bzw. Filtereinheiten an einem solchen Sammelkanal zusammengeschaltet werden, um dann insgesamt ein Filtersystem zu bilden. Dies wird im Zusammenhang mit den Figuren noch näher erläutert.

Bei der Erfindung ist der Sammelkanal vorzugsweise aus Kunststoff, insbesondere aus einem durch Spritzguß verarbeitbaren Kunststoff, gefertigt. Mit besonderem Vorteil handelt es sich bei diesem Kunststoff um Polyethersulfon (PES).

Beschrieben wird weiterhin eine Haltevorrichtung für Filtereinheiten mit mindestens einem keramischen Filter, vorzugsweise keramischen Flachfilter, und mindestens einer Halterung zur flüssigkeitsdichten Festlegung des Filters in der Halterung. Diese Haltevorrichtung weist erfindungsgemäß mindestens einen Rahmen, vorzugsweise nach Art eines Gehäuses auf. Man kann dies auch so beschreiben, daß die Haltevorrichtung nach Art eines Racks ausgestaltet ist. Hierbei handelt es sich um einen allgemeinen Begriff für Haltevorrichtungen, die eine Anzahl kleinerer Elemente oder Bauteile logistisch zu einer größeren Einheit zusammenfassen.

Erfindungsgemäß sind an diesem Rahmen Mittel zur Festlegung von mindestens einem Filtratsammelkanal vorgesehen und gegebenenfalls noch zusätzlich Mittel zur Festlegung von mindestens einer Filtereinheit. Vorzugsweise sind am Rahmen Mittel zur Festlegung von zwei Filtratsammelkanälen vorgesehen. Die fakultativ mögliche Festlegung der Filtereinheiten erfolgt vorzugsweise mit Hilfe von Öffnungen oder Ausnehmungen an der Haltevorrichtung, in die an den Filtereinheiten vorhandene Positioniermittel eingreifen oder angreifen.

Mit der Konstruktion der Haltevorrichtung wird erreicht, daß einzelne Filtereinheiten zu einem größeren Filtersystem zusammengebaut werden können. Dieses Filtersystem kann dann beispielsweise als modulartiges Bauteil in einer Anlage zur Abwasseraufbereitung oder zur Trinkwassergewinnung eingesetzt werden.

Die Festlegung der Filtereinheiten in der Haltevorrichtung geschieht dadurch, daß ein Filtratsammelkanal über geeignete Haltemittel am Rahmen der Haltevorrichtung fixiert wird. Da die Filtereinheiten selbst wiederum mit dem Filtratsammelkanal verbunden sind, werden auch diese in der Haltevorrichtung gehalten. Dabei können zur Unterstützung zusätzlich Haltemittel für die Filtereinheiten selbst vorgesehen sein, wobei dies vorzugsweise über an der Filtereinheit vorhandene Positioniermittel erfolgen kann.

Insbesondere ist die Haltevorrichtung zur Festlegung von zwei Filtratsammelkanälen ausgebildet. Solche Ausführungen sind insbesondere für die Fälle vorgesehen, bei denen ein Filter, vorzugsweise Flachfilter, zwischen zwei Halterungen für dieses Filter festgelegt ist, so daß sich an zwei gegenüberliegenden Seitenflächen des Filters jeweils eine Halterung befindet. Die beidseitig angeordneten Halterungen werden dann mit jeweils einem Filtratsammelkanal verbunden, welche in der Haltevorrichtung festgelegt werden. Dies wird im Zusammenhang mit den Figuren noch näher erläutert.

Die Haltevorrichtung kann grundsätzlich aus jedem Material gefertigt sein, das insbesondere gegenüber der zu filtrierenden Flüssigkeit beständig, d. h. in der Regel korrosionsbeständig, ist. Bevorzugt werden geeignete Kunststoffe als Material für die Haltevorrichtung verwendet. In weiteren bevorzugten Ausführungsformen ist die Haltevorrichtung aus einem korrosionsbeständigen Metall oder einer korrosionsbeständigen Metallegierung gefertigt, insbesondere aus Edelstahl.

Besonders bevorzugte Ausführungsformen der Haltevorrichtung liegen dann vor, wenn diese Haltevorrichtungen mit mindestens einer der erfindungsgemäßen Filtereinheiten und/oder mit mindestens einem erfindungsgemäßen Sammelkanal bestückt sind. Dann handelt es sich bei der Haltevorrichtung entweder um ein fertiges Filtersystem oder um ein Filtersystem, das für den Einbau der Filtereinheiten vorbereitet ist.

Wie bereits teilweise geschildert, ist die Bereitstellung der beschriebenen Gegenstände (Filtereinheit, Halterung, Sammelkanal, Haltevorrichtung) mit einer ganzen Reihe von Vorteilen verbunden.

So wird es ermöglicht, keramische Filter, insbesondere keramische Flachfilter (keramische Flachmembranen), bei der Abwasseraufbereitung oder Trinkwassergewinnung einzusetzen. Auf diese Weise kommen deren vorteilhafte Eigenschaften wie hohe mechanische und chemische Beständigkeit, lange Lebensdauer, besseres Reinigungsverhalten und dergleichen voll zur Geltung.

Diese Vorteile lassen sich insbesondere deshalb realisieren, da solche Filter erfindungsgemäß auf eine technisch praktikable Weise zu einem Filtersystem, das mehrere solche Filter beinhaltet, zusammengefügt werden können.

Solche Anordnungen ermöglichen es, die Filter im sogenannten Dead-End-Modus zu betreiben, dessen Vorteile bereits weiter oben beschrieben wurden.

Die beschriebenen Gegenstände sind sowohl für sich alleine funktionsfähig und mit anderen nicht beanspruchten Bauteilen kombinierbar.

So lassen sich die Halterungen mit keramischen Filtern, insbesondere keramischen Flachfiltern, zu den Filtereinheiten durch Verklebung zusammenfügen. Diese Filtereinheiten können dann mit dem Sammelkanal verbunden, insbesondere zusammengesteckt, werden. Die so erhaltenen Bauteile aus Sammelkanal und Filtereinheiten lassen sich dann in die Haltevorrichtung einbauen.

Dieses Gesamtsystem ist, gegebenenfalls durch Abwandlung der Bauteile, beliebig erweiterbar, um dessen Verwendung in Anlagen unterschiedlicher Größenordnung (nach dem Baukastenprinzip) zu ermöglichen. Die einzelnen Bauteile dieses Filtersystems sind flüssigkeitsdicht miteinander verbunden, so daß die Filtration im Unterdruckverfahren und die Rückspülung bei höheren Drücken durchgeführt werden kann. Der Zusammenbau läßt sich einfach realisieren, beispielsweise über die beschriebenen Steckverbindungen zwischen Filtrataustritt an der Halterung der Filtereinheit und entsprechender Aufnahme am Sammelkanal.

Ein besonderer Vorteil der Erfindung zeigt sich daran, daß einzelne Filtereinheiten leicht ausgetauscht werden können. Aufgrund der Tatsache, daß ein separater Sammelkanal vorgesehen ist, läßt sich eine einzelne Filtereinheit leicht entfernen, ohne daß andere Filtereinheiten, die neben der auszutauschenden Filtereinheit angeordnet sind, ausgebaut werden müssen.

Ein weiterer Vorteil der Erfindung liegt in der Vielzahl an Ausführungsformen für ein Filtersystem, die realisiert werden können. So kann eine variable Zahl an Filtereinheiten in weitgehend beliebiger Abfolge in variablem Abstand mit dem Sammelkanal verbunden werden. So kann beispielsweise nur jede zweite oder jede dritte Aufnahme am Sammelkanal mit einer Filtereinheit bestückt sein, um den Abstand der Filter/Filterplatten zu variieren. Auf diese Weise können für verschiedene Anwendungen jeweils optimale Filterbedingungen realisiert werden. So können beispielsweise größere Filterabstände gewählt werden, wenn eine Verstopfung des Raumes zwischen zwei Filtern durch Festkörper in der zu filtrierenden Flüssigkeit (Haare, Schlamm u. a.), die sogenannte Verzopfung, zu befürchten ist. Aufwendige Reinigungen können auf diese Weise vermieden werden.

In anderen Fällen kann man durch eine möglichst enge Anordnung der Filter (Besetzung jeder Aufnahme am Sammelkanal durch Filtereinheiten) eine optimale Raumausnutzung mit vielen Filtern in einem bestimmten Volumen realisieren.

Zusätzlich können in das Filtersystem weitere Bauteile integriert sein, beispielsweise eine Aufnahmevorrichtung für den Membranrohrbelüfter und Lüftungsleitbleche. Besonders bevorzugt weist das Filtersystem zwei oder vier Lüftungsleitbleche auf.

Die genannten und weitere Vorteile der Erfindung ergeben sich aus den im folgenden im Zusammenhang mit den Figuren beschriebenen Ausführungsformen in Verbindung mit den Unteransprüchen. Dabei können die einzelnen Merkmale jeweils für sich allein oder in Kombination miteinander verwirklicht sein. Die im folgenden beschriebenen Ausführungsformen dienen lediglich zur Erläuterung und zum besseren Verständnis der Erfindung und sind in keiner Weise einschränkend zu verstehen.

In den Zeichnungen zeigen
- Fig. 1: eine Filtereinheit aus einem keramischen Flachfilter und zwei Halterungen,
- Fig. 2: eine Halterung gemäß Fig. 1 für die flüssigkeitsdichte Festlegung von keramischen Flachfiltern,
- Fig. 3: einen Sammelkanal für die Aufnahme von Filtereinheiten gemäß Fig. 1 bzw. von Halterungen gemäß Fig. 2,
- Fig. 4: eine Draufsicht von unten auf einen Sammelkanal gemäß Fig. 3, der mit Filtereinheiten gemäß Fig. 1 bzw. mit Halterungen gemäß Fig. 2 bestückt ist (Teilansicht),
- Fig. 5: ein Filtersystem aus zwei Sammelkanälen gemäß Fig. 3, die mit Filtereinheiten gemäß Fig. 1 bestückt sind,
- Fig. 6: das Filtersystem gemäß Fig. 5 in Draufsicht,
- Fig. 7: eine Haltevorrichtung für Filtereinheiten, insbesondere für Filtereinheiten gemäß Fig. 1, und
- Fig. 8: die Haltevorrichtung gemäß Fig. 7, die mit dem Filtersystem gemäß Fig. 5 bestückt ist.

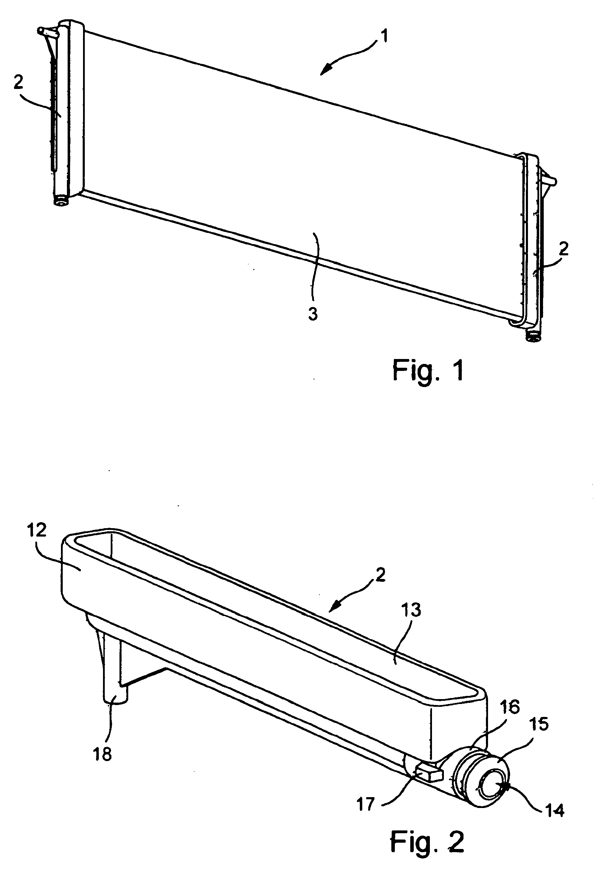

Fig. 1 zeigt eine Filtereinheit aus zwei Halterungen 2, in denen ein keramisches Flachfilter 3 an zwei seiner gegenüberliegenden Stirnseiten flüssigkeitsdicht festgelegt ist. Diese Festlegung erfolgt jeweils in dem diesen Seitenflächen zugehörigen Randbereich des Filters 3 und zwar mit Hilfe einer in Fig. 1 nicht näher dargestellten Verklebung. Die entsprechenden Randbereiche des Filters 3 sind zu diesem Zweck in die beiden Halterungen 2 eingeschoben, so daß dementsprechend die Verklebung zwischen den Innenflächen der Halterung 2 und den entsprechenden Außenflächen des Filters 3 vorgesehen ist. Dies wird im Zusammenhang mit Fig. 2 noch näher erläutert.

Bei dem Filter 3 gemäß Fig. 1 handelt es sich um ein rechteckförmiges keramisches Flachfilter aus Aluminiumoxid-Keramik mit einer Porengröße von ca. 1 µm. Dieses Substratmaterial ist durch Extrusion in monolithischer Form hergestellt und zwar mit Hilfe eines Mundstücks, so daß im Inneren des Filters 3 parallel Filtratkanäle verlaufen, die in diejenigen Stirnflächen münden, welche in die Halterungen 2 eingebracht sind. Auf diese Weise kann das in das Filter 3 eintretende Filtrat durch das Filter 3 hindurch an beiden Seiten in beide Halterungen 2 hindurchtreten. Dies wird im Betrieb durch das Anlegen eines Unterdrucks erreicht. Auf dem keramischen Substratmaterial (Aluminiumoxid-Keramik) befindet sich eine keramische Beschichtung aus nanoskaligen Partikeln, im vorliegenden Fall Aluminiumoxid-Partikel mit einer Korngröße unter 100 nm. Die Dicke dieser Beschichtung aus nanoskaligen Keramikmaterial beträgt ca. 25 µm. Die in der Beschichtung ausgebildete Porengröße beträgt zwischen 200 nm und 300 nm.

In Fig. 2 ist eine Halterung 2 gemäß Fig. 1 näher dargestellt. Die Halterung 2 besitzt einen länglichen, einstückigen (Grund-)Körper 12, der im Spritzgußverfahren aus Polyethersulfon (PES) gefertigt ist. In diesem Grundkörper 12 ist eine Aufnahme 13 ausgebildet, die zum Einbringen und Festlegen eines keramischen Filters (siehe Fig. 1) dient. Form und Abmessungen dieser Aufnahme 13 sind der Form und den Abmessungen des entsprechenden keramischen Filters (hier: Flachfilters) angepaßt. Dabei dienen die Innenflächen der Aufnahme 13 dazu, mit Hilfe eines in Fig. 2 nicht dargestellten Klebstoffs die Klebeverbindung zu den entsprechenden Bereichen des Flachfilters herzustellen. Zu diesem Zweck kann der Klebstoff (manuell oder maschinell) entweder auf die entsprechenden Innenflächen der Aufnahme 13 und/oder auf die entsprechenden Flächen des Filters aufgebracht werden. Um einen flüssigkeitsdichten Abschluß zu erreichen, läuft die durch den Klebstoff bereitgestellte Verklebung dabei auf der gesamten Kontaktfläche zwischen Aufnahme 13 und dem zugehörigen Filter um.

Weiter ist in Fig. 2 ein Filtrataustritt 14 vorhanden, durch den das Filtrat, das durch das Filter über dessen Filtratkanäle in die Halterung 2 einfließt, aus der Halterung 2 herausfließen kann. Im dargestellten Fall ist der Filtrataustritt 14 als Steck- bzw. Rastverbindung ausgebildet, die mit einem entsprechenden Teil eines Filtratsammelkanals (in Fig. 2 nicht dargestellt) zusammenwirken kann. Mit der am Filtrataustritt 14 vorgesehenen Hinterschneidung/Kante 15 ist dabei eine weitgehende formschlüssige Verbindung mit dem entsprechenden Bauteil des Filtratsammelkanals möglich. In die in Fig. 2 ebenfalls dargestellte umlaufenden Nut 16 am Filtrataustritt 14 kann gegebenenfalls ein Dichtring eingelegt werden, der die Dichtigkeit der Verbindung zwischen Halterung 2 und Filtratsammelkanal weiter verbessert.

Schließlich sind im Bereich des Filtrataustritts 14 an der Halterung 2 noch zwei, 180° zueinander versetzte Vorsprünge 17 vorhanden, von denen in Fig. 2 nur einer dargestellt ist. Diese Vorsprünge 17 dienen als Anschlag für die in einem Filtratsammelkanal eingesteckte Halterung 2.

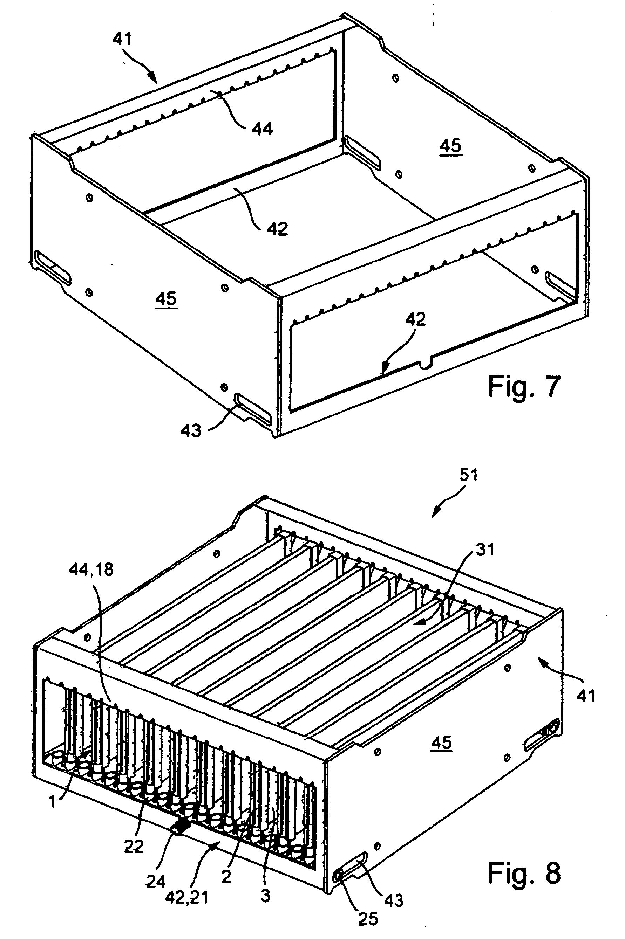

Schließlich zeigt Fig. 2 noch ein Positioniermittel 18, das an der dem Filtrataustritt 14 gegenüberliegenden Seite der Halterung 2 vorgesehen ist. Dieses Positioniermittel 18 besitzt die Form eines weitgehend stiftförmigen Vorsprungs, der bereits im Spritzgußverfahren an den Grundkörper 12 angeformt ist. Die genaue Funktion dieses Positioniermittels wird im Zusammenhang mit den Figuren 7 und 8 ebenfalls noch erläutert.

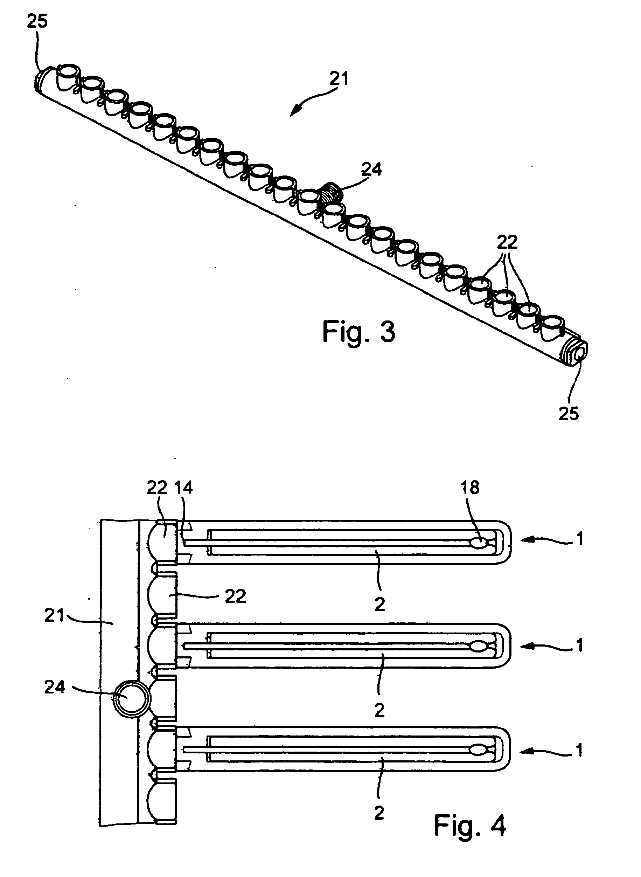

Fig. 3 zeigt einen Filtratsammelkanal 21. Dieser ist ebenfalls im Spritzgußverfahren aus Polyethersulfon (PES) gefertigt und besitzt 21 Aufnahmen 22 für Halterungen 2 gemäß Fig. 2 bzw. Filtereinheiten 1 gemäß Fig. 1. Es versteht sich, daß ein derartiger Filtratsammelkanal mit jeder anderen beliebigen Zahl von Aufnahmen 22 ausgebildet sein kann.

Gemäß Fig. 3 sind die Aufnahmen 22 so ausgebildet, daß sie zur Aufnahme der als Steckverbinder ausgestalteten Filtrataustritte 14 gemäß Fig. 2 geeignet sind. Dementsprechend können auf den Filtratsammelkanal 21 gemäß Fig. 3 21 Halterungen 2 gemäß Fig. 2 aufgesteckt werden. Der Sammelkanal 21 ist in einem solchen Fall vollständig mit Aufnahmen 2 bestückt. Fig. 3 zeigt dabei die Variabilität des Sammelkanals, der es ermöglicht, auch nur einen Teil der Aufnahmen 22 mit Halterungen 2 zu bestücken. Auf diese Weise kann der Abstand entsprechender Filtereinheiten und damit der Abstand der einzelnen keramischen Flachfilter variiert werden. Dies wurde in der Beschreibung bereits erläutert.

Weiter zeigt Fig. 3 einen Filtratsammelaustritt 24, der im vorliegenden Fall ein Schraubgewinde aufweist. Dieser Austritt 24 ist beim Sammelkanal 21 mittig angeordnet, was zweckmäßig aber nicht notwendig ist. In bevorzugten Ausführungsformen kann der Austritt 24 auch auf der Seite angeordnet sein, was Vorteile beim Anschluss eines Schlauches bieten kann. An seinen beiden Enden weist der Filtratsammelkanal 21 stopfenartige Endelemente 25 auf, die den Filtratsammelkanal 21, je nach Ausführung, entweder flüssigkeitsdicht abschließen oder ein Zusammenstecken mit weiteren Sammelkanälen 21 ermöglichen. Im letzteren Fall ist eine modulartige Erweiterung des gesamten Filtersystems möglich.

Ein Filtratsammelkanal 21, der mit Filtereinheiten 1 bzw. Halterungen 2 bestückt ist, ist in Fig. 4 dargestellt. Bei dieser Darstellung handelt es sich um eine Draufsicht auf den mittigen Teil des Filtratsammelkanals, wobei der vom Sammelkanal 21 abragende Filtratsammelaustritt 24 (siehe auch Fig. 3) auf den Betrachter gerichtet ist.

Weiter ist in Fig. 4 zu erkennen, daß Halterungen 2 mit ihrem jeweiligen Filtrataustritt 14 in jede zweite Aufnahme 22 des Filtratsammelkanals 21 eingebracht, vorzugsweise eingesteckt sind. Zum noch besseren Verständnis der Anordnung der Halterungen 2 im Sammelkanal 21 sei hier ausdrücklich auf den Offenbarungsgehalt der Figuren 2 und 3 verwiesen. Die an den Halterungen 2 dargestellten Positioniermittel 18 (siehe auch Fig. 2) sind dementsprechend ebenfalls auf den Betrachter hin ausgerichtet.

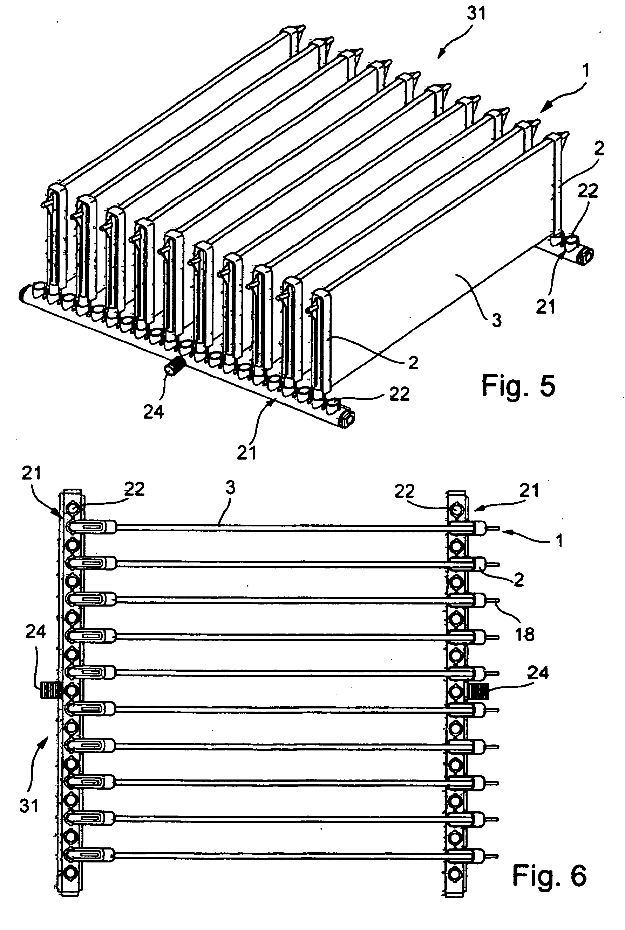

Ein bereits weitgehend funktionstaugliches Filtersystem 31 zeigt Fig. 5. Dort ist zu erkennen, wie eine Vielzahl von Filtereinheiten 1 (im dargestellten Fall 10 Filtereinheiten) mit jeweils 2 Halterungen 2 und einem Filter 3 in zwei Filtratsammelkanäle 21 eingesteckt sind. Die Filtereinheiten 1 sind in Fig. 1 näher dargestellt, die Filtratsammelkanäle 21 in Fig. 3.

Deutlich zu sehen ist in Fig. 5 auch, daß jede zweite Aufnahme 22 im Filtratsammelkanal 21 mit einer Halterung 2 der jeweiligen Filtereinheit 1 bestückt ist. Auf diese Weise wird zwischen den einzelnen Filtereinheiten 1 ein gewünschter Abstand eingehalten. Die damit verbundenen Vorteile wurde bereits erläutert. Selbstverständlich ist es möglich, jede Aufnahme 22 eines Sammelkanals 21 mit Filtereinheiten 1 zu bestücken oder auch zwei oder mehr Aufnahmen 22 zwischen zwei Filtereinheiten 1 freizulassen. Dies zeigt die Flexibilität der erfindungsgemäßen Bauteile im Vergleich zum Stand der Technik.

Dementsprechend kann gemäß Fig. 5 die zu filtrierende Flüssigkeit die Filter 3 umströmen, wobei im sogenannten Dead-End-Verfahren gearbeitet werden kann. Das Filtrat tritt dann durch die Poren in der Keramik in das Innere der Filter 3 über und wird durch die dort vorgesehenen Filtratkanäle an beiden Seiten des Filters 3 über die Halterungen 2 in die beiden Filtratsammelkanäle 21 abgeleitet. Von dort kann das Filtrat über den Filtratsammelaustritt 24 aus dem Filtersystem 31 abgeleitet werden. In diesem Zusammenhang versteht es sich von selbst, daß bei einer Teilbestückung von Aufnahmen 22 am Filtratsammelkanal 21 die freibleibenden Aufnahmen 22 verschlossen sind, entweder bereits durch die Fertigung oder mit Blindstopfen oder dergleichen.

Fig. 6 ist eine weitere Darstellung des Filtersystems 31 gemäß Fig. 5 und zwar eine Draufsicht von oben. Auch hier sind die beiden Filtratsammelkanäle 21 mit ihren Aufnahmen 22 zu erkennen, wobei 10 Filtereinheiten 1 in jede zweite Aufnahme 22 eingesteckt sind. Gut zu erkennen sind in Fig. 6 auch die Positioniermittel 18 an den Halterungen 2, deren Funktion noch kurz erläutert werden wird.

Eine Haltevorrichtung 41 für das Filtersystem 31 gemäß Figuren 5 und 6 bzw. für die Filtereinheiten 1 gemäß Fig. 1 zeigt Fig. 7.

Bei der Haltevorrichtung 41 handelt es sich um ein gehäuseartiges oder rahmenartiges Bauteil 45, das man auch als Rack bezeichnen kann, und das im vorliegenden Fall aus Edelstahl gefertigt bzw. aus Edelstahlteilen zusammengebaut ist.

Die Haltevorrichtung 41 weist Mittel 42 zum Festlegen von zwei Filtratsammelkanälen auf, wobei diese Mittel 42 nach Art eines Winkels ausgebildet sind. An deren Enden sind Öffnungen 43 vorgesehen, die zur zusätzlichen Festlegung der Filtratsammelkanäle dienen können.

Desweiteren zeigt Fig. 7 weitere Festlegemittel 44 in Form von Ausnehmungen, wobei jede Ausnehmung einem Positioniermittel 18 an der Halterung 2 einer Filtereinheit 1 zugeordnet werden kann.

Ein vollständig funktionsfertiges Filtersystem 51 ist in Fig. 8 gezeigt. Dabei ist das vormontierte Filtersystem 31 gemäß Figuren 5 und 6 in eine Haltevorrichtung 41 gemäß Fig. 7 eingebracht. Es ist deutlich zu erkennen, insbesondere im linken Teil der Fig. 8, wie die Filtratsammelkanäle 21 mit Hilfe der Festlegemittel 42 (Winkel) an der Haltevorrichtung 41 festgelegt sind. Dabei nehmen die in Fig. 7 dargestellten Öffnungen 43 die Endelemente 25 des Filtratsammelkanals 21 auf, was eine zusätzliche Fixierung bewirkt. Zur weiteren Stabilisierung greifen die Positioniermittel 18 an den Halterungen 2 in die Ausnehmungen 44 an der Haltevorrichtung 41 ein.

So ergibt sich insgesamt ein mechanisch stabiles Filtersystem 51, das als Ganzes als eine Art Filtermodul in eine Anlage zur Abwasseraufbereitung oder zur Trinkwassergewinnung eingebaut oder integriert werden kann. Aufgrund der kompakten Bauweise ist auch ohne weiteres eine Nachrüstung bereits bestehender Anlagen mit solchen Filtersystemen 51 möglich.

## Patentansprüche

1. Filtersystem, umfassend
- mindestens zwei Filtereinheiten (1) mit mindestens einem extrudierten keramischen Flachfilter (3) und Halterungen (2) zur flüssigkeitsdichten Festlegung des mindestens einen Filters, wobei der Filter in seinem Inneren mindestens einen Filtratkanal aufweist, der an gegenüberliegenden Stirnseiten des Filters mündet und diese Stirnseiten jeweils in einer Halterung festgelegt sind, wobei ein Filtratabfluss über das Innere des Filters durch die Halterung hindurch vorgesehen ist und wobei der Filter in den Halterungen durch Verklebung mit Hilfe eines Klebstoffs festgelegt ist, und
- mindestens einen Filtratsammelkanal (21),
wobei die Halterungen (2) der Filtereinheit mindestens einen Filtrataustritt (14) aufweisen und dieser Filtrataustritt (14) zur Verbindung der Halterungen (2) mit dem mindestens einen Filtratsammelkanal (21) vorgesehen ist **dadurch gekennzeichnet, dass** der Filtrataustritt als Steckverbinder ausgebildet ist, der über eine zugehörige Aufnahme in dem Filtratsammelkanal (21) mit diesem flüssigkeitsdicht und lösbar verbunden ist.

2. Filtersystem nach Anspruch 1, **dadurch gekennzeichnet, daß** die Verklebung mindestens in einem Randbereich des Filters vorgesehen ist.

3. Filtersystem nach Anspruch 1 oder Anspruch 2, **dadurch gekennzeichnet, daß** es sich bei dem Filter um ein im wesentlichen rechteckförmiges Flachfilter (3) handelt.

4. Filtersystem nach Anspruch 3, **dadurch gekennzeichnet, daß** zur Festlegung dieses Filters in den Halterungen (2) eine Aufnahme (13) vorgesehen ist, deren Form dem entsprechenden Querschnitt des darin festgelegten Filters entspricht.

5. Filtersystem nach einem der vorhergehenden Ansprüche, **dadurch gekennzeichnet, daß** es sich bei dem Klebstoff um einen chemisch härtenden Klebstoff handelt.

6. Filtersystem nach einem der vorhergehenden Ansprüche, **dadurch gekennzeichnet, daß** es sich bei dem Klebstoff um einen Epoxidharz-Klebstoff oder einen Polyurethan-Klebstoff handelt.

7. Filtersystem nach einem der vorhergehenden Ansprüche, **dadurch gekennzeichnet, daß** die Verklebung als geschlossene, streifen- oder bandförmige Verklebung vorgesehen ist.

8. Filtersystem nach Anspruch 1, **dadurch gekennzeichnet, daß** mehrere Filtratkanäle vorgesehen sind.

9. Filtersystem nach einem der vorhergehenden Ansprüche, **dadurch gekennzeichnet, daß** der Filter mindestens teilweise aus nanoskaligen Partikeln gefertigt ist oder mindestens eine Beschichtung aufweist, die mindestens teilweise aus nanoskaligen Partikeln besteht.

## Claims

1. A filter system, comprising
- at least two filter units (1) having at least one extruded ceramic flat filter (3) and mountings (2) for liquid-tight securing of the at least one filter, the filter including in the interior at least one filtrate duct leading on opposed end faces of the filter and each of said end faces secured in a mounting, a filtrate outflow via the interior of the filter through the mounting being provided, and the filter being secured in the mountings by adhesive bonding with the aid of an adhesive, and
- at least one filtrate collecting duct (21),
the mountings (2) of the filter unit including at least one filtrate outlet (14), and said filtrate outlet (14) being provided for connecting the mountings (2) to the at least one filtrate collecting duct (21),
**characterized in that**
the filtrate outlet is designed as a plug connector that is connected to an associated receptacle in the filtrate collecting duct (21) for liquid-tight and removable connection thereto.

2. The filter system according to claim 1, **characterized in that** the adhesive bonding is provided at least in a marginal region of the filter.

3. The filter system according to claim 1 or claim 2, **characterized in that** the filter is an essentially rectangular flat filter (3).

4. The filter system according to claim 3, **characterized in that** for securing said filter in the mountings (2) a receptacle (13) is provided, and the form of said receptacle is correspondent to the corresponding cross section of the filter secured therein.

5. The filter system according to any of the preceding claims, **characterized in that** the adhesive is a chemically curing adhesive.

6. The filter system according to any of the preceding claims, **characterized in that** the adhesive is an epoxy resin adhesive or a polyurethane adhesive.

7. The filter system according to any of the preceding claims, **characterized in that** the adhesive bonding provided is a closed strip-shaped or band-shaped adhesive bond.

8. The filter system according to claim 1, **characterized in that** a plurality of filtrate ducts are provided.

9. The filter system according to any of the preceding claims, **characterized in that** the filter is made at least partially from nano-scale particles or has at least one coating composed at least partially of nano-scale particles.

## Revendications

1. Système de filtrage, comprenant
- au moins deux unités de filtrage (1) avec au moins un filtre plat céramique extrudé (3) et des supports (2) pour la fixation étanche aux liquides de l'au moins un filtre, sachant que le filtre présente en son intérieur au moins un canal de filtrat, qui aboutit aux faces frontales opposées du filtre, et que ces faces frontales sont fixées respectivement dans un support, sachant qu'est prévu un écoulement du filtrat par l'intérieur du filtre à travers le support, et que le filtre est fixé dans les supports par collage au moyen d'une colle, et
- au moins un canal de collecte de filtrat (21),
sachant que les supports (2) de l'unité de filtrage présentent au moins une sortie de filtrat (14) et que cette sortie de filtrat (14) est prévue pour relier les supports (2) à l'au moins un canal de collecte de filtrat (21), **caractérisé en ce que** la sortie de filtrat est conçue sous forme de raccord enfichable qui est raccordé de manière étanche et amovible au canal de collecte de filtrat (21) par un logement correspondant disponible dans ledit canal.

2. Système de filtrage selon la revendication 1, **caractérisé en ce que** le collage est prévu dans au moins une zone de bord du filtre.

3. Système de filtrage selon la revendication 1 ou la revendication 2, **caractérisé en ce que** le filtre est un filtre plat (3) essentiellement rectangulaire.

4. Système de filtrage selon la revendication 3, **caractérisé en ce que**, pour fixer ce filtre dans les supports (2), est prévu un logement (13) dont la forme correspond à la coupe transversale respective du filtre qui y est fixé.

5. Système de filtrage selon l'une des revendications précédentes, **caractérisé en ce que** la colle est une colle à durcissement chimique.

6. Système de filtrage selon l'une des revendications précédentes, **caractérisé en ce que** la colle est une colle à la résine époxy ou une colle polyuréthane.

7. Système de filtrage selon l'une des revendications précédentes, **caractérisé en ce que** le collage est prévu sous forme de collage fermé en forme de ruban ou de bande.

8. Système de filtrage selon la revendication 1, **caractérisé en ce que** sont prévus plusieurs canaux de filtrat.

9. Système de filtrage selon l'une des revendications précédentes, **caractérisé en ce que** le filtre est fabriqué au moins en partie à partir de particules de taille nanométrique ou présente au moins un revêtement qui est constitué au moins en partie de particules de taille nanométrique.
